# EUROPEAN PATENT APPLICATION

(11) **EP 2 315 167 A1**
(43) Date of publication of application: **27.04.2011**
(21) Application number: 09290751.8
(22) Date of filing: 30.09.2009
(51) Int. Cl.: G06Q 10/00

(54) **Artistic social trailer based on semantic analysis**

(71) Applicant: Alcatel Lucent, 75008 Paris (FR)
(72) Inventor: Baynaud, Erwan, 91620 Nozay (FR); Gonguet, Arnaud, 91620 Nozay (FR)
(74) Representative: Hedarchet, Stéphane

(57) **Abstract**

A method to provide social trailers to users social networks, in which, the user of a social networks chooses a template of social trailer, said user authorizes his user's profile to automatically file said social trailer.

These data compose the extended user's profile and can be crossed to the metadata of all media available to the application.

## Description

The main social networks (as Facebook or MySpace) are the most consulted websites on the internet.

The success of these websites are explained by the social features provided but also because of a good integration of different kind media: music, pictures and videos.

However, this integration could be done in a better way.

For example, the main Facebook® profile page present basic textual information, this is insufficient, most of visitors are immediately going to the user's pictures gallery without reading the textual information because of the lack of artistic, creativity.

On the other side, MySpace® presents a profile overloaded because of the unlimited use of JavaScript in the page, resulting in an undigested melt of information and media without a real consistency and most of the time impossible to display correctly.

More generally those social networks provide an impression of quantity, but lack of the quality that can exist when a perceivable personal involvement creates a unique aesthetic.

A problem to be solved by the present invention is to overcome the lack of directing for media and information representation on the profile page of the user of social networks, in order to create a feeling of immersive personalization.

The invention describes a method to introduce social trailers on users social networks.

These social trailers are composed of different types of media gathered in a coherent video sequence which could be compared to the trailer of a movie, a TV show or a radio show.

As all users are not experienced movie directors, the invention proposes trailer scripts, retrieve personal preferences based on the social network profiles and propose trailer mock ups.

But as the keyword is the assertion of a personal aesthetic, the invention allows a huge personalization of the social trailer.

The user chooses a template of trailer which is then automatically filled with media correlated to the user's profile. The data used are all the textual information filled by the user in his profile and all the metadata of the media associated to his profile.

These data compose the extended user's profile and can be crossed to the metadata of all media available to the application.

After the automatic generation of the trailer, the user can eventually bring some modifications to the resulting video thanks to an intuitive authoring tool allowing to play on different parameters to adjust the final rendering.

The resulting video sequence can be inserted directly on the main profile page or better, to be presented before to reach the main profile page, as an introduction in the manner of a welcome screen.

However this invention could be applicable to other context that social networks, when some data are collected on the users and where other users need to get an overview of the user's tastes. For example, resumees repositories websites could implement the solution.

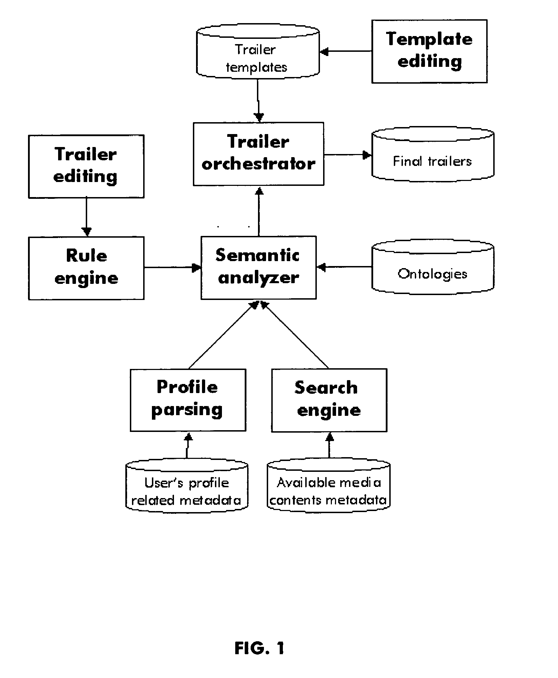

Figure 1 describes the characteristics of the invention in a global architecture.

The profile parsing is in charge of retrieving all the data filled by the user about himself: his network, his career, his interests, his friends... Furthermore, it allows to retrieve also the metadata associated to the media he has uploaded as pictures, videos and music. Finally, additional data can be consolidated according to people in relation with the user. Indeed, the analyze of the said data and media metadata of the relationships of the user can help to affine the profile of the user. This is the key interest of this innovative approach.

The compilation of all the data collected create an extended user's profile.

The search engine analyses all the media available in the social network platform to be added to the trailer. For example, MySpace contains a lot of indexed music in its MySpace Music platform and Facebook contains a lot of tagged pictures. In addition, a lot of free contents available on huge media platforms (like Youtube, Deezer) can be used to create the trailer. The local repository of the user can also be browsed to complete the sources of the trailer.

The semantic analyzer have to cross the information about the user, consolidated by the profile parsing and the media found by the search engine. By the use of ontologies, it can determines which pictures, which videos and which textual information will be the more relevant for being inserted into the video trailer. This function create a ranking of relevant media and allows the trailer orchestrator to generate with the trailer template a first version of the trailer, automatically generated.

The trailer editing function allows the user to adjust the rendering of the first version of the trailer. Indeed, the user can choose which of the information he wants less or more, which theme is more important, which ambiance he prefers, if he prefers something more personal or more public and so on. These information are sent to the rule engine responsible of the post-processing treatments.

The rule engine uses the information sent by the trailer editing to modify which media contents are chosen by the trailer orchestrator to created the final trailer. The ranking initially created by the semantic analyzer is modified by the rule engine according to the command received from the trailer editing. The result is the modification of the trailer

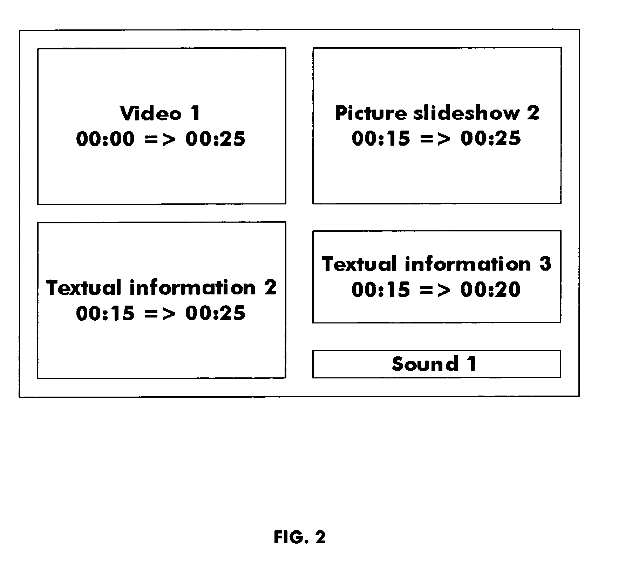

The template editing function allows the user to create or customize trailer templates. A trailer template is composed of the different media types placed spatio-temporally in the scene. A very basic example of what could be this template is presented in the Figure 2.

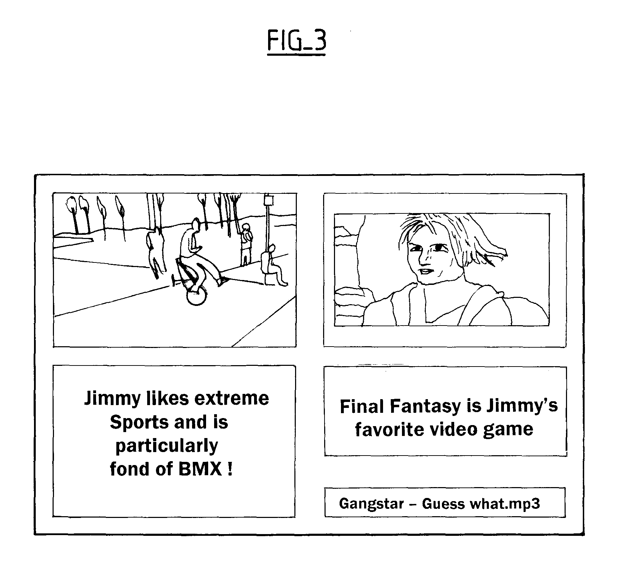

The trailer orchestrator is the heart of our solution. It uses the media ranking created by the semantic analyzer and the template chosen by the user to compute the final video trailer putting the best ranked media at the position or the moment determined in the template. Figure 3 shows a snapshot of the final aspect of a simple trailer (with template of Figure 2).

The trailer orchestrator uses the indicative semantic (the user likes the Rolling Stones) to decide what to show, and uses the qualitative semantic (this track is slow, happy, misty...) to decide how to show.

The content is thus retrieved thanks to the "profile parsing", the "search engine" and the "trailer editing".

The formalism is based on pre-defined trailer scripts (fade in "happy" "music track" with slow motion on a "personal picture", then medley of "preferred music" with "textual presentation"...).

## Claims

1. A method to provide social trailers to users social networks, in which, the user of a social networks chooses a template of social trailer, said user authorizes his user's profile to automatically file said social trailer.
